Europäisches Patentamt

European Patent Office

Office européen des brevets

(11) Veröffentlichungsnummer: **0 118 055**
**A2**

(12) **EUROPÄISCHE PATENTANMELDUNG**

(21) Anmeldenummer: **84101326.1**

(22) Anmeldetag: **09.02.84**

(51) Int. Cl.³: **B 60 B 33/02**

(30) Priorität: 04.03.83 DE 3307652

(43) Veröffentlichungstag der Anmeldung:
12.09.84 Patentblatt 84/37

(84) Benannte Vertragsstaaten:
AT BE CH DE FR GB IT LI LU NL SE

(71) Anmelder: Hufa-Rollen Hugo Fassbender GmbH & Co.
KG
Sudstrasse 1-5
D-5632 Wermelskirchen 2(DE)

(72) Erfinder: Schmitz, Dieter
Gartenfeld 60
D-5632 Wermelskirchen 2(DE)

(72) Erfinder: Lips, Uwe
Kreckersweg 20
D-5632 Wermelskirchen 3(DE)

(74) Vertreter: Rieder, Hans-Joachim, Dr. et al,
Corneliusstrasse 45 Postfach 11 04 51
D-5600 Wuppertal 11(DE)

(54) Lenkrollen-Feststellvorrichtung.

(57) Die Erfindung betrifft eine Vorrichtung zur Festlegung der Drehbewegung der Rolle (7) und der Schwenkbewegung der Rollengabel (6) von Lenkrollen (1), mit einem im Bereich der Rollengabel-Drehachse (x-x) liegenden, in Richtung des Rollenumfangs (7') axial verschieblichen Dorn (16), und einem Fesselungsorgan (28) für die Schwenkbewegung der Rollengabel, welches von der Rollengabel-Kopfplattenunterseite ausgeht und in Rollenbremsstellung mit seinem freien Ende die Schwenkbewegung durch zahnlückenartigen Eingriff blockiert, und schlägt zur Erzielung einer herstellungstechnisch einfachen, gebrauchssicheren Bauform erleichterter Ein- bzw. Nachstellbarkeit vor, daß das rollenseitige Ende des Dornes (16) ein Gewinde (G) trägt, auf welchem eine mit einem Teil ihres Randbereichs (R) bremsend auf den Rollenumfang (7') aufsetzende Mutter (34) sitzt.

FIG. 1

## Lenkrollen-Feststellvorrichtung

Die Erfindung bezieht sich auf eine Vorrichtung zur Feststellung der Drehbewegung der Rolle und der Schwenkbewegung der Rollengabel von Lenkrollen, mit einem im Bereich der Rollengabel-Drehachse liegenden, in Richtung des Rollenumfangs axial verschieblichen Dorn, und einem Fesselungsorgan für die Schwenkbewegung der Rollengabel, welches von der Rollengabel-Kopfplattenunterseite ausgeht und in Rollenbremsstellung mit seinem freien Ende die Schwenkbewegung durch zahnlückenartigen Eingriff blockiert.

Eine Lenkrollen-Feststellvorrichtung dieser Art ist durch die DE-OS 30 09 081 bekannt. Dort liegt das freie Ende des als Hebel ausgebildeten Fesselungsorgans zwischen Rollenumfang und Dornende. Letzteres weist Radialverzahnung auf. Mit dieser wirken aufwärts gerichtete Zähne des Fesselungshebels zusammen. Eine bundhintergreifende Kegelfeder belastet den mit der Drehachse zusammenfallenden Dorn in Freigaberichtung. Der aus Federmaterial bestehende Fesselungshebel wird bei nicht ordnungsgemäß stattgefundenem Zahnlückeneingriff überdurchschnittlich tief in die Lauffläche der Rolle eingedrückt. Die noch mögliche Drehbewegung bis zum endgültigen Rasteingriff bringt hohe Belastungen für die Zahnung und kann zu einem alsbaldigen Verschleiß führen; die Möglichkeit des federnden Ausweichens ist nicht gegeben. Außerdem liegt ein für einen Massenartikel noch zu hoher Aufwand vor.

17 996   P 1/P./Rz.   6.2.1984

Aufgabe der Erfindung ist es, eine gattungsgemäße Lenkrollen-Feststellvorrichtung in einfacher, gebrauchsgünstiger Bauform so auszubilden, daß der zahnlückenartige Eingriff keinen Einfluß mehr auf die Bremskraft der Laufrolle hat, dies bei erleichterter Einstellbarkeit der Vorrichtung.

Gelöst ist diese Aufgabe durch die im Anspruch 1 angegebene Erfindung. Die Unteransprüche sind vorteilhafte Weiterbildungen der erfindungsgemäßen Vorrichtung.

Die Bremskraft tritt nicht mehr in Abhängigkeit von der ordnungsgemäßen Zahnlückeneingriffsstellung auf. Bremsung und Blockierung wirken getrennt. Die Blockierungsmittel sind aus dem Bremsbereich entfernt. Entsprechend tritt am räumlich kleinen Stirnende des Dornes auch keine Verzahnung mehr auf. Stattdessen ist in einfacher Weise nun so vorgegangen, daß das rollenseitige Ende des Dornes Gewinde aufweist. Auf diesem sitzt eine mit einem Teil ihres Randbereichs bremsend auf den Rollenumfang aufsetzende Mutter. Es kann sich hier um einen topfförmigen Mutterkörper handeln. Zweckmäßig kommt Kunststoffmaterial zur Anwendung. Hier lassen sich bremsgünstige Materialien individuell auswählen. Die Mutter kann in selbstschneidender Zuordnung vorgesehen sein. Um die Einstellung ohne Beeinträchtigung des Zusammenhalts der Vorrichtung zu ermöglichen, trägt das Gewinde zusätzlich eine oberhalb der Mutter liegende Spannmutter zur drehsicheren Verspannung einer mit dem freien Ende des Fesselungsorgans in den Zahneingriff tretenden Scheibe. Über die kraftschlüssige Drehsicherung kann aber auch so verfahren werden, daß Scheibe und Dorn in einen Formschluß treten. Der Dorn ist dazu bspw. an zwei diametral einander gegenüberliegenden Längsseiten abgeflacht. Die Scheibe weist die passende Durchtrittsöffnung auf. Ein ausreichender Abstand der die Schwenkbewegung der Rollengabel blockierenden Mittel wird in einfacher Weise dadurch erreicht, daß das als Feder ausgebildete Fesselungsorgan sich über den Zahneingriffsbe-

17 996    P 1/P./Rz.    6.2.1984

reich hinaus bis etwa zur Scheibenmitte hin gabelförmig fortsetzt und mit diesen Gabelzinken die Rückholfeder für den Dorn bildet. Auf diese Weise wird auch die im Zusammenhang mit dem Vorläufer erläuterte Feder eingespart. Die Montage läßt sich einfacher bewerkstelligen. Die überlagernd zur Bremsbewegung stattfindende Festlegung der Rollengabel gegen Schwenkbewegung läßt auch keinerlei Tendenz aufkommen in Richtung einer Verdrehung der den Bremsklotz bildenden Mutter. Zur Optimierung der Bremskraft ist schließlich hinsichtlich der Mutter noch so vorgegangen, daß sie an ihrer dem Rollenumfang zugekehrten Breitseite mit einzelnen Ringstufen ausgestattet ist. Es handelt sich um konzentrische Ringstufen, die zum Zentrum hin treppenförmig ansteigen und in jeder Drehwinkellage der Mutter quer zur Rollebene liegende Rippen bilden.

Der Gegenstand der Erfindung ist nachstehend anhand eines zeichnerisch veranschaulichten Ausführungsbeispieles näher erläutert. Es zeigt

Fig. 1     die erfindungsgemäß ausgebildete Lenkrolle in Seitenansicht im Halbschnitt,

Fig. 2     die Draufsicht auf Fig. 1,

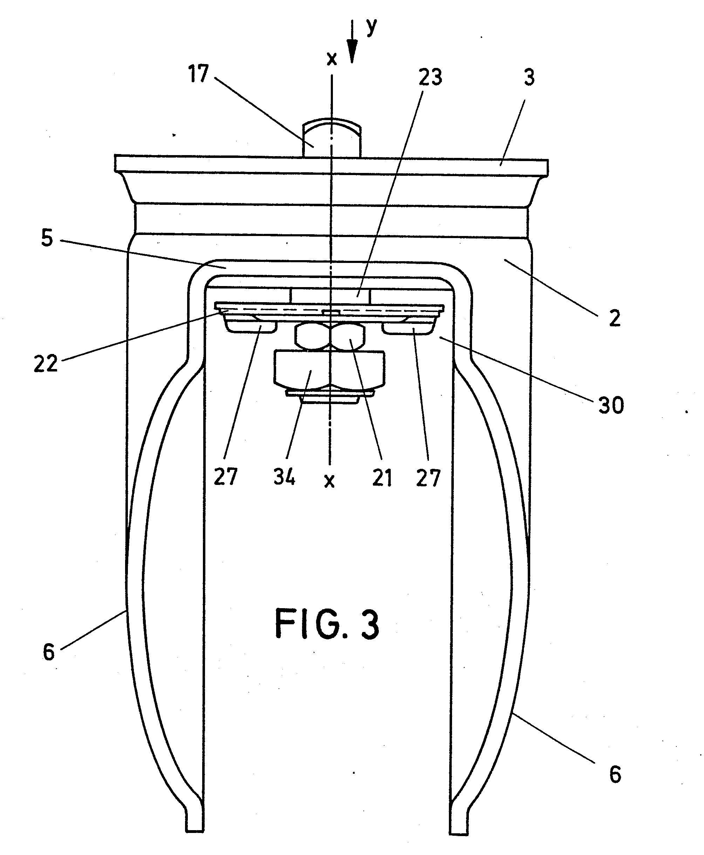

Fig. 3     eine Stirnansicht der Lenkrolle (ohne Rollenkörper),

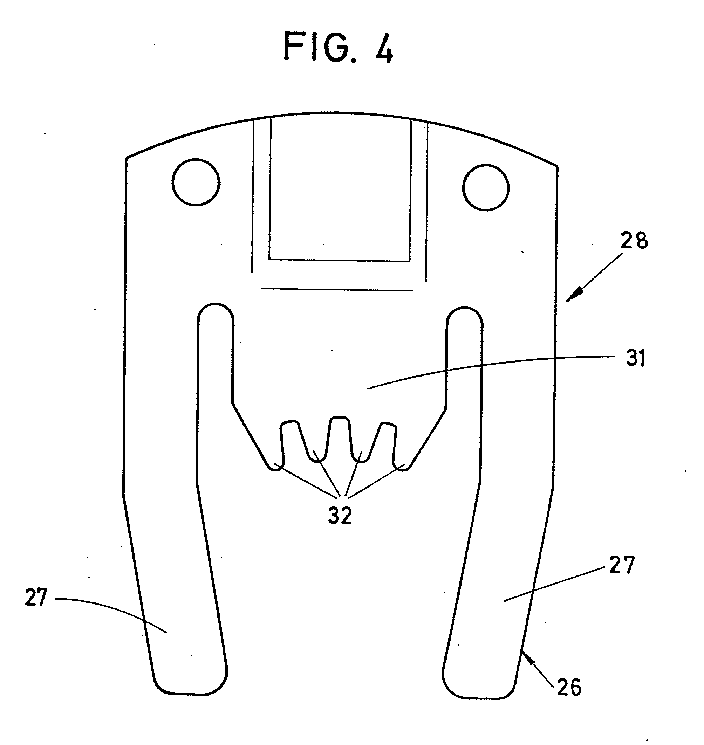

Fig. 4     die Draufsicht auf das Fesselungsorgan in Einzeldarstellung,

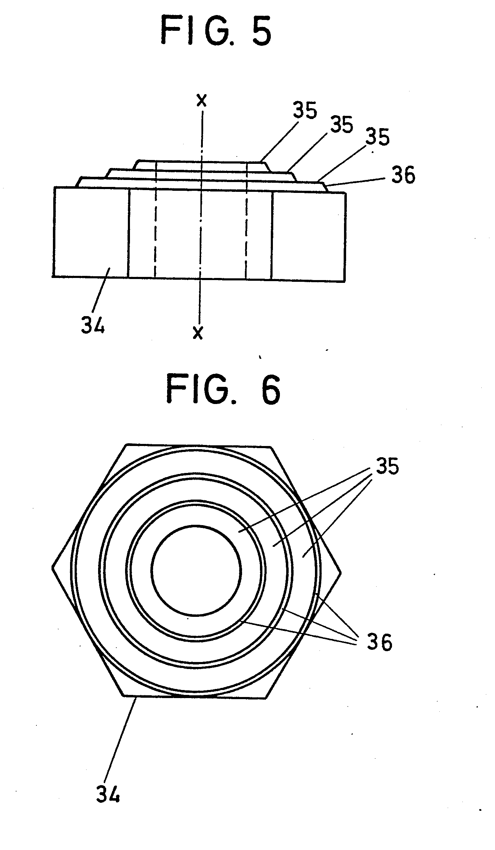

Fig. 5     die Mutter in Seitenansicht, vergrößert und

Fig. 6     die Draufsicht hierzu.

Die bspw. an einem nicht näher dargestellten Müllcontainer verwendbare, in Vierfachbestückung zuzuordnende Lenkrolle 1 besteht aus

17 996     P 1/P./Rz.     6.2.1984

einer um eine vertikale Achse x-x drehbar gelagerte Lenkgabel 2. Letztere lagert an einer Befestigungsplatte 3 und stützt sich unter Zwischenlage einer kreisringförmig angeordneten Kugelreihe 4 ab. Ihr ist eine Ringschale angeprägt. Eine entsprechende Ringschale befindet sich auch an der Rollengabel-Kopfplatte 5.

Die abwärts gerichteten Gabelschenkel 6 lagern zwischen sich eine Rolle 7. Letztere sitzt auf einer nicht näher dargestellten horizontalen Achse, die jedoch ebenenmäßig aus dem Bereich der vertikalen Drehachse x-x der Lenkgabel 2 verlegt ist.

Zur Halterung der Rollengabel-Kopfplatte 5 dient eine Stützscheibe 8, welche unter Zwischenlage einer ebenfalls kreisringförmigen Kugelreihe 9 die entsprechende Fesselung bewirkt. Weiter sind die Stützscheibe 8 und die Befestigungsplatte 3 durch eine Büchse 10 miteinander verbunden. Letztere bildet die eigentliche Gelenkstelle für die Lenkgabel 2. Die Büchse 10 übergreift oben mit einem Ringbund 11 den Lochrand einer zentralen Durchbrechung 12 der Befestigungsplatte 3. Das untere, freie Ende der Büchse 10 ist über einen entsprechenden Rand einer Durchbrechung 13 der Stützscheibe 8 gestaucht. Stützscheibe 8 und Befestigungsplatte 3 werden über ein büchsenartiges Distanzstück 14 axial gegeneinander abgestützt. Das Distanzstück 14 sitzt auf der in diesem Bereich zylindrischen Büchse 10.

Der den Ringbund 11 aufweisende Abschnitt schließt oberseitig ebenengleich mit der Befestigungslöcher 15 aufweisenden Platte 3 ab.

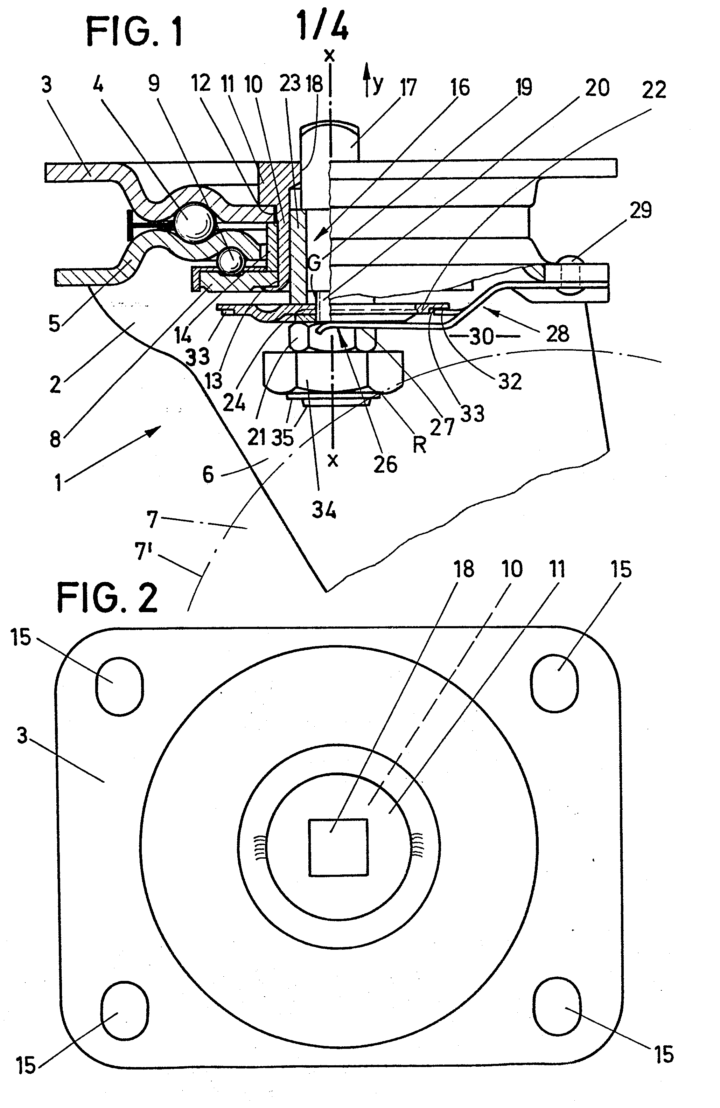

Die Büchse 10 nimmt einen als Druckstück fungierenden Dorn 16 auf. Letzterer ist zentral angeordnet, fällt also mit der vertikalen Drehachse x-x der Lenkgabel 2 zusammen. Der im Querschnitt unrund, hier vierkäntig gestaltete Kopf 17 des Dornes 16 lagert oben in einer entsprechenden Vierkantausnehmung 18 der Büchse 10. Wie aus Fig. 1 ersichtlich, überragt der Kopf 17 zu seiner Druckbetätigung die Oberseite der Büchse

17 996    P 1/P./Rz.    6.2.1984

10. Mit der kuppelartig gewölbten Oberseite wirkt ein nicht näher dargestelltes Betätigungselement, wie bspw. ein Exzenter zusammen.

Der Kopf 17 setzt sich nach unten hin in einen abgesetzten, zylindrischen Abschnitt 19 fort, der in einen wiederum abgesetzten, ein Gewinde G tragenden Abschnitt 20 übergeht. Auf letzterem sitzt eine Spannmutter 21, welche eine Scheibe 22 am Dorn 16 festhält. Die Scheibe ist Bestandteil einer die Drehbewegung der Lenkgabel 2 blockierenden Fesselungsvorrichtung. Der zylindrische Abschnitt 19 ist auf seiner ganzen Länge und der gewindetragende Abschnitt 20 auf kürzerem axialem Bereich von einer zylindrischen Büchse 23 umgeben, die sich oberseitig an dem Stufensprung zwischen Kopf 17 und Abschnitt 19 abstützt und von unten her durch die Scheibe 22 erfaßt ist. Dorn 16 und Scheibe 22 sind so undrehbar eingelagert. Eine zusätzliche Drehsicherung zwischen Scheibe 22 und dem das Gewinde G tragenden Abschnitt 20 kann durch eine nicht näher dargestellte Formschlußverbindung erzielt werden, bspw. in der Form, daß diametral einander gegenüberliegende Längsseiten des gewindetragenden Abschnitts 20 abgeflacht sind und die zentrale Durchbrechung 24 der Scheibe 22 formangepaßt gestaltet ist.

Der Dorn 16 steht unter Wirkung einer Rückholfeder 26. Letztere belastet den Dorn in Richtung des Pfeiles y. Den Begrenzungsanschlag bildet die Unterseite der Stützscheibe 8, gegen welche die Oberseite der mit dem Dorn fest verbundenen Scheibe 22 tritt.

Gebildet ist die Rückholfeder 26 von den Gabelzinken 27 eines die Schwenkbewegung der Lenkgabel blockierenden Fesselungsorgans 28. Letzteres geht von der Rollengabel-Kopfplattenunterseite aus. Die von einem Niet 29 o. dgl. gebildete Befestigungsstelle liegt auf Höhe der horizontalen Rollenachse. Von hier ausgehend erstreckt sich das von einem Stanzling gebildete Fesselungsorgan 28 unter zweifacher Abwinklung in Richtung des seitlich liegenden Gabelraums 30.

Der Gabelgrund weist einen frei vorstehenden Zahnkranzabschnitt 31 auf. Dessen Innen-Zahnbereich ist aus dem geneigt abfallenden Abwinklungsbereich des Stanzlings horizontal abgewinkelt. Unter Abwärtsverlagerung des Dornes 16 entgegen der Kraft der Rückholfeder 26 tritt der Rand der Scheibe 22 von oben her auf die Zähne 32. Die unterseitige Randzone ist mit passenden Zahnlücken 33 versehen entsprechend der Teilung der Zähne 32.

Das Gewinde G des Dornes 16 trägt rollenseitig eine Mutter 34 als Bremsblock. In Bremsstellung tritt der Randbereich R bremsend auf den Rollenumfang 7', d. h. gegen die Lauffläche der Rolle 7. Die Mutter läßt sich auf dem die Spannschraube 21 überragenden Bereich des Gewindes G individuell einstellen bzw. nach Verschleiß nachstellen. Es handelt sich um eine aus Kunststoff, insbesondere Nylon gefertigte Mutter. Gebildet ist der parallel fluchtend zum Rollenumfang 7' verlaufende Rand auch noch von einzelnen Ringstufen 35, welche zum Zentrum der Mutter hin in gleicher Stufenhöhe ansteigen. Die Stufenflanken 36 erstrecken sich in einen Winkel von ca. 40° zur Achse x-x zur Mutternbreitseite hin. Der Mutternumfang weist die übliche Sechserteilung auf zum Ansetzen eines Werkzeuges. Natürlich kann es sich auch um eine kreisrunde Scheibe handeln mit radialen Einsteckvertiefungen für die Drehmitnahme.

Besondere Sicherungsmittel für die Mutter sind nicht erforderlich, da sie in einer hohen Reibspannung aufgedreht werden kann, gegebenenfalls im Sinne eines sich selbstschneidenden Gewindes.

Die Bremsblockierungsstellung ergibt sich aus Fig. 1. Wird der auf den Kopf 17 ausgeübte Betätigungsdruck aufgehoben, verlagern die blattfederartig wirkenden Gabelzinken 27 die Scheibe 22 nach oben. Der Zahneingriff wird so aufgehoben. Die Mutter 34 hebt vom Radumfang ab. Wie ersichtlich, reichen die Enden der Gabelzinken 27 bis etwa auf Höhe der Scheibenmitte. Das freie Ende ist unter Berücksichtigung der Federbewegungsebene nach unten gewölbt.  Es kommt so nicht zu Verschleißbildungen.

Alle in der Beschreibung erwähnten und in der Zeichnung dargestellten neuen Merkmale sind erfindungswesentlich, auch soweit sie in .den Ansprüchen nicht ausdrücklich beansprucht sind.

P A T E N T A N S P R Ü C H E

1. Vorrichtung zur Feststellung der Drehbewegung der Rolle und der Schwenkbewegung der Rollengabel von Lenkrollen, mit einem im Bereich der Rollengabel-Drehachse liegenden, in Richtung des Rollenumfangs axial verschieblichen Dorn, und einem Fesselungsorgan für die Schwenkbewegung der Rollengabel, welches von der Rollengabel-Kopfplattenunterseite ausgeht und in Rollenbremsstellung mit seinem freien Ende die Schwenkbewegung durch zahnlückenartigen Eingriff blockiert, dadurch gekennzeichnet, daß das rollenseitige Ende des Dornes (16) ein Gewinde (G) trägt, auf welchem eine mit einem Teil ihres Randbereichs (R) bremsend auf den Rollenumfang (7') aufsetzende Mutter (34) sitzt.

2. Vorrichtung nach Anspruch 1, dadurch gekennzeichnet, daß das Gewinde (G) zusätzlich eine oberhalb der Mutter (34) liegende Spannmutter (21) trägt zur drehsicheren Verspannung einer mit dem freien Ende des Fesselungsorgans (28) in den Zahneingriff (32/34) tretenden Scheibe (22).

3. Vorrichtung nach Anspruch 2, gekennzeichnet durch Formschlußeingriff zwischen Scheibe (22) und Dorn (16).

4. Vorrichtung nach Anspruch 2, dadurch gekennzeichnet, daß das als Feder ausgebildete Fesselungsorgan (28) sich über den Zahneingriffsbereich hinaus bis etwa zur Scheibenmitte hin gabelförmig fortsetzt und mit diesen Gabelzinken (27) die Rückholfeder (26) für den Dorn (16) bildet.

5. Vorrichtung nach Anspruch 1, dadurch gekennzeichnet, daß die Mutter (34) an ihrer dem Rollenumfang (7') zugekehrten Breitseite mit einzelnen Ringstufen (35) ausgestattet ist.

**0118055**

**FIG. 1**

**1/4**

**FIG. 2**

FIG. 3

FIG. 4

FIG. 5

FIG. 6